# EUROPEAN PATENT SPECIFICATION

(11) **EP 0 475 400 B1**
(45) Date of publication and mention of the grant of the patent: **14.08.1996**
(21) Application number: 91115425.0
(22) Date of filing: 12.09.1991
(51) Int. Cl.: C08L 77/00

(54) **Polyamide/polypropylene blends**
Polyamid/Polypropylen-Mischungen
Mélanges de polyamide et de polypropylene

(30) Priority: 14.09.1990 DE 4029226
(43) Date of publication of application: 18.03.1992
(73) Proprietor: E.I. DU PONT DE NEMOURS AND COMPANY, Wilmington Delaware 19898 (US)
(72) Inventor: Wissmann, Rolf Bernhard, Parkersburg, West Virginia 26101 (US)
(74) Representative: von Kreisler, Alek, Dipl.-Chem.

(56) References cited:
- EP-A- 261 748
- EP-A- 265 527
- EP-A- 346 149
- EP-A- 370 735
- EP-A- 0 346 149
- PATENT ABSTRACTS OF JAPAN, vol. 11, no. 398 (C-466), 25th December 1987; & JP-A-62 158 739 (TONEN SEKIYUKAGAKU) 14-07-1987
- PATENT ABSTRACTS OF JAPAN, vol. 11, no. 398 (C-466), 25th December 1987; & JP-A-62 158 740 (TONEN SEKIYUKAGAKU) 14-07-1987
- PATENT ABSTRACTS OF JAPAN, vol. 10, no. 28 (C-326), 4th February 1986; & JP-A-60 179 455 (MITSUBISHI) 13-09-1985
- PATENT ABSTRACTS OF JAPAN, vol. 10, no. 182 (C-356), 25th June 1986; & JP-A-61 028 539 (MITSUI) 08-02-1986
- PATENT ABSTRACTS OF JAPAN, vol. 13, no. 145 (C-583), 10th April 1989; & JP-A-63 305 148 (SHOWA DENKO) 13-12-1988

## Description

This invention relates to unfilled and filled blends of a polyamide and a propylene polymer and more particularly to such blends which have a balanced combination of high toughness and low water absorption.

### BACKGROUND DISCUSSION

Polyamide resins such as polyamide 6.6 are very strong resins well suited for molding of various articles; however, such resins are sensitive to moisture. To lessen moisture pick-up, polyolefins such as polypropylene are added to the polyamide. This in turn leads to compatibility problems between these two different polymers.

Physical melt blending of a polyamide and a polypropylene does not result in acceptable end-use properties due to insufficient compatibility of the polar polyamine and the nonpolar polypropylene. This lack of compatibility results in severe delamination.

It has been known that in order to improve the compatibility of polyamides and polypropylene the addition of a modified polypropylene that is able to interact with the end groups of the polyamide is necessary. The modification of polypropylene is obtained by, for example, reacting it with an unsaturated carboxylic acid or the anhydride thereof. Various compositions of grafted polyolefin compatibilized blends of polyamide and polyolefins are known and the patent disclosures in this area are plentiful.

The general disadvantage of thus compatibilized blends is their relatively low overall toughness - ES-A-8,305,395 to Du Pont describes a combination of a polyamide and a maleic acid or anhydride grafted polyolefin which may generally cover the use of a grafted polyolefin as compatibilizer for polyamide polyolefin blends.

In order to enhance compatibility between a polyamide and polypropylene, it has been suggested to either add a modified polypropylene to a blend of polyamide and unmodified polypropylene or to blend only modified polypropylene with the polyamide. The modified polypropylene can be obtained by reacting polypropylene with an unsaturated carboxylic acid, such as fumaric acid for example, or derivates thereof, such as maleic anhydride. Various compositions are known. However, while the compatibilization of polyamide and polypropylene can be improved effectively by the use of such modified polypropylenes, overall toughness of those kinds of blends is insufficient (EP-A-0 128 775).

For improving impact strength of polyamide/polypropylene blends, it has therefore been suggested to use both a modified polypropylene and a modified elastomer or to use only a modified elastomer. While the use of only a modified elastomer does improve impact properties somewhat, it usually yields resins with anisotropic properties due to insufficient homogeneity and a laminar type morphology. The use of higher concentrations of modified elastomer can improve morphology, but at the expense of a significant reduction in flex modulus. As to the use of both, modified polypropylene and modified elastomer it has been proposed to either simultaneously modify polyamide, unmodified polypropylene and elastomer (Japanese patent HEI 1(1989)-103662), to simultaneously modify polypropylene and elastomer (EP-A-0 194 705 and EP-A-235 876 for example) or to separately modify polypropylene and elastomer (JP-A-60053550). However, the use of simultaneously modified components does not allow the controlled adjustment of critical physical properties such as stiffness, thermal properties and shrinkage on one hand and good overall toughness on the other hand.

Regarding separately modified polypropylene and elastomer, as described in JP-A-60053550 the use of ethylene-propylene-diene polymers with a diene content of 0.5 molar percent or less was recommended. However, for better effectiveness of the elastomer as a toughener for polyamide/polypropylene blends, the total diene content in the EPDM should be >1%, preferably between 3 and 6%.

EP-A-0 261 748 describes blends of polyamide and polyolefin which are impact modified with a novel, grafted hydrogenated styrene-butadiene block copolymer with reduced sensitivity to oxidation. EP-A-0 265 527 claims the beneficial effect of 0.5 to 5 mol of a metallic compound for obtaining excellent impact resistance and surface luster, over compatibilized blends of polyamides and polyolefins which do not contain this metallic compound. EP-A-0 346 149 is concerned with a reduction of linear expansion coefficient of compatibilized blends of polyamide and polyolefin, by the addition of potassium titanate whiskers with or without additional fillers.

### SUMMARY OF THE INVENTION

According to the present invention there is provided a polymeric composition which consists of:
(a) 45%-65% by weight polyamide;
(b) 10%-18% by weight unmodified polypropylene;
(c) 10%-15% by weight ethylene-propylene-diene monomer grafted with an acid having at least one carboxylic acid group or a derivative thereof comprising 50%-80% by weight of ethylene, 10%-50% by weight of propylene, 1%-10% by weight of a diene of 6-12 carbon atoms, and an acid content of 0.05%-3% by weight of the diene;
(d) 2%-15% by weight a grafted modified polypropylene grafted with an acid selected from carboxylic acid or derivative thereof, having a melt index at 190 °C of 50-150 g/10 minutes, the grafted propylene having an acid content of 0.05%-3% by weight of the grafted polypropylene; and
(e) optionally inorganic fillers and other additives, whereby the composition has (i) a dry-as-molded Gardner toughness (ASTM D-3029) greater than 18 Joules and a Notched Izod toughness (ASTM D-256) greater than 120 Joules/meter, and (ii) a water absorption less than 2% by weight at equilibrium at 50% Relative Humidity.

Also provided is a filled polymeric composition wherein an inorganic filler is added to an aforesaid polymeric composition in an amount sufficient to provide a composition having (a) a water absorption less than 2% by weight at equilibrium at 50% Relative Humidity and (b) a flex modulus of more than 60 % after conditioning (measured at 50 % relative humidity) and (c) an elongation at break of more than 15 % in the dry-as-molded state.

Further provided is a shaped article formed from the aforesaid unfilled or filled polymeric compositions.

### DETAILED DESCRIPTION OF THE INVENTION

### The Components

### a) Polyamides:

The polyamide, component (a), (PA), of this invention is well known in the art and embraces those semi-crystalline and amorphous polymers having a molecular weight of at least 5000 and commonly referred to as nylons. Suitable polyamides include those described in U.S. -A- 2,071,250, 2,071,251, 2,130,523, 2,130,948, 2,241,322, 2,312,966, 2,512,606, and 3,393,210. The polyamide can be produced by condensation of equimolar amounts of a saturated dicarboxylic acid containing from 4 to 12 carbon atoms with a diamine, in which the diamine contains from 4 to 14 carbon atoms. Excess diamine can be employed to provide an excess of amine end groups over carboxy end groups in the polyamide. Example of polyamides include polyhexamethylene adipamide (66 nylon), polyhexamethylene azelaamide (69 nylon), polyhexamthylene sebacamide (610 nylon), and polyhexamethylene dodecanoamide (612 nylon), the polyamide produced by ring opening of lactams, i.e., polycaprolactam, polylauric lactam, poly-11-amino-undecanoic acid, bis(paraaminocyclohexyl) methane dodecanoamide. It is also possible to use in this invention polyamides prepared by the copolymerization of two of the above polymers or terpolymerization of the above polymers or their components, e.g., for example, an adipic, isophthalic acid hexamethylene diamine copolymer. Preferably the polyamides are linear with a metling point in excess of 200°C. Specifically, PA6.6, PA6, PA6.10, PA6.12, PA11, PA12,PA12.12, PA6/6.6 etc. may be used. Among these polyamides, PA6.6 and PA6 or blends of those two polyamides are particularly suitable and preferred.

There are no special restrictions as to molecular weight of the polyamides. Preferable are polyamides with a relative viscosity (RV) as measured in 90% formic acid of 20 to 70, preferably 40-60.

The percentage of polyamide in compositions of present invention ranges from 45 to 65 weight percent. If less than 45 weight percent polyamide is used, the mechanical and thermal properties of the resulting resin will not be significantly different from the pure polypropylene. If more than 65 weight percent of polyamide is used, the reduction in moisture sensitivity is not significant enough.

### b) Unmodified Polypropylene:

The unmodified polypropylene, component (b), in this invention can be a homo-polymer, a random-copolymer, a block-copolymer, blends of the above polypropylenes or a toughened polymer of any of the above polypropylenes. For economic reasons, for highest flexural modulus and for highest heat distortion temperature homo-polypropylenes are most preferred. There are no specific restrictions as to the melt viscosity of the unmodified polypropylene, however, a melt index, measured with 2.16 kg at 190°C, of smaller than 4 g/10 min. is preferred for improved overall toughness of the blend. The quantity of the unmodified polypropylene in the composition should be between 10 and 18 weight percent. The polypropylenes will be governed by the goal physical properties for the blend composition. Polypropylenes and their manufacture are also well known to those skilled in the art.

### c) Modified Toughener:

The use of functionalized ethylene-propylene-diene monomer (EPDM) as toughener in polyamides has been described in patent US-A-4,174,358. Functionalized EPDM does also act as a toughener in blends of the present invention, since the polyamide remains the continuous phase. Suitable functionalized tougheners (c) for the present invention are described in patent US-A-3,884,882; 4,026,967; and Re 31,680. The most preferred tougheners for use in this invention are ethylene-propylene-diene polymers, comprising 50 to 80 weight percent ethylene, 10 to 50 weight percent propylene and 1 to 10 weight percent of one or different dienes of 6-12 carbon atoms, having a carboxylic acid content or derivatives thereof of about 0.05 to 3 weight percent of the polymer. The dienes most preferred are 1,4-hexadiene and norbornadiene.

The concentration of modified toughener should be between 10 and 15 weight percent. Degree of functionality and concentration of the modified toughener will affect the balance of physical properties such as overall toughness, in particular notched Izod toughness, stiffness, thermal properties and shrinkage. Maleic anhydride is the preferred functionalizing agent.

### d) Modified Polypropylene:

The base polymer for the modified polypropylene, component (d), can again be a homo-polymer, a random copolymer, a block-copolymer or a toughened polymer of any of the above-described polypropylenes. Homo-polymers and co-polymers are preferred most. There are no specific restrictions as to the melt viscosity of the precursor polypropylene, however, a melt index, measured at 2.16 kg and 190°C, of smaller than 1.5 g/10 min. is preferred.

The modified polypropylene, component (d), is graft modified with 0.05 to 3.0 weight percent, preferably 0.5 to 1 weight percent, of a graft polymer from carboxylic acids or their derivatives. The grafting of the polypropylene can be carried out in the melt state, in solution or in suspension as described in the state-of-the-art literature. The melt viscosity of the modified polypropylene is not restricted, however most effective compatibilization was found if the melt index, measured at 2.16 kg and 190°C is between 50 to 150 g/cm³ or if the melt flow index, measured at 2.16 kg and 230°C is between 250 and 350 g/cm³, respectively. Maleic anhydride is the preferred functionalizing agent. Such modified polypropylenes can be prepared as described in EP-A-0 370 735 and EP-A-370 736.

### e) Inorganic Filler:

There are no specific limitations as to the type and concentration of inorganic fillers that can be used in blend compositions of present invention provided that a moisture absorption of 2.0 weight percent is not exceeded and the retention of the flexural modulus of more than about 60 % after conditioning (measured at 50 % relative humidity) and an elongation at break of more than 15 % is obtained in the dry-as-molded state.

Preferred filler types are glass fibers and mineral fillers. Most preferred fillers are mineral fillers such as kaolin, mica and talc. The preferred concentration of mineral fillers in the filled composition is between 5% and 40 weight percent, preferably 10% to 20%.

### f) Other Additives:

The compositions of the present invention can contain one or more additives known in the art, such as thermal stabilizers, UV stabilizers and antioxidants, lubricants and colorants. Most suitable heat stabilizers are aromatic amines, phenols or phosphites or mixtures thereof.

### PREPARATION

### General Procedure:

To avoid excessive polymer degradation during compounding and injection molding, all polymer preblends are pre-dried to a moisture content below 0.15 weight percent.

The ingredients are then mixed in their proper proportions in a suitable vessel such as a drum or a plastic bag. The mixture is then melt blended in a single or twin screw extruder at a melt temperature, measured at the exit of the die of 270° to 300°C. Melt temperatures below 270°C are appropriate for Nylons which have a lower melting point than PA6.6, whereas melt temperatures significantly above 300°C should be avoided to keep degradation of the polypropylene low. For good dispersion of the unmodified and modified polypropylene and the modified EPDM and in case of mineral filler blends, it is preferred to use a twin screw extruder with appropriate screw design. For specific reasons, it may be desirable to side-feed part of the ingredients downstream into the extruder. For mineral filled blends it can be advantageous to feed the polyamide and the mineral filler into the rear of the extruder and side-feed the unmodified and the modified polypropylene, the modified toughener and the heat stabilizer downstream or vice versa.

The compounded material exiting the die is quenched in water, surface water removed by compressed air and cut into pellets. In cases where the remaining moisture content of the finished product is higher than 0.1 weight percent, the material is dried in a vacuum oven.

The dry material is then molded into test specimens using a standard injection molding machine. Preferably a melt temperature of 270°C to 285°C and a mold temperature of 60° to 110°C is used. Other important molding parameters such as injection and hold pressure and screw forward time are adjusted for optimum appearance of the specimens. Blending and molding parameters for particular blends can be determined by those skilled in the art.

### Test Methods:

Physical properties were tested dry-as-molded and conditioned. For conditioning the bars were either stored for 6 days in 50°C water or for 2 days in a boiling aqueous potassium acetate solution which corresponds to accelerated conditioning to equilibrium at 50% relative humidity. Useful blends have a water absorption below 3.5% in the former test and below 2% in the latter test.

Tensile properties such as yield and tensile strength and elongation were measured according to ASTM D-638. The unfilled blends were tested with a cross head speed of 5.1 cm/min (2 inch/min.), whereas all mineral filled blends were tested with 5 mm/min.

Flex modulus was determined according to ASTM D-790 with a cross head speed of 0.127 cm/min (0.05 inch/min.) for unfilled blends and with 1.3 mm/min. for all mineral filled resins.

Notched Izod Impact Strength was measured according to ASTM D-256. For unfilled blends 125X12.5X3 mm flex bars were used, cut in half and notched in the middle of both halves, i.e. measuring notched Izod impact strength once near the gate and once far from the gate. For all mineral filled blends mid sections of ASTM tensile bars were used, notched only in the middle of these specimens. Useful unfilled blends have a Notched Izod at 23°C greater than 120 Joules/meter.

Gardner Impact Toughness in form of mean failure energy was determined according to ASTM D-3029, using a 1.87 Kg (4 lb.) hammer. As test specimens 75X125X3 mm plaques were used. If a plaque did not break a maximum height of ca. 1 m with a hammer weight of 1.81 Kg (4 lb.) a value of >160 inlb or >18 J/m was recorded, meaning that for failure of that particular material either a height of >1 m or a weight of >1.81 Kg (>4 lb.) would have to be used. This test method was used for unfilled blends only. Useful blends have a Gardner toughness at 23°C greater than 18 Joules/m.

Ceast Impact Toughness determined with an 'Advanced Fractoscope System "AFS/MK3" CEAST Modular Falling Weight cod. 6557/000' at a test temperature of +23°C. A test load of 12 kg at a falling height of 127 cm resulted in an impact speed of 5 m/s. The dart diameter was 20 mm and the supporting ring inner diameter was 40 mm. As test specimens 60 mm discs 3 mm thick, single gated on one side were used. This test method was used for filled resins only.

The surprising finding of present invention has been that a balance of physical properties, specifically moisture absorption, flex modulus, notched Izod toughness and falling dart impact strength can be largely controlled by both the melt viscosity and level of functionality of the modified polypropylene and by the level of functionality of the modified elastomer, mainly modified EPDM, and by the level and concentration of the various components.

It was found that with only 2% to 5 weight percent of modified EPDM, falling dart impact strength, as measured by either Gardner toughness or CEAST toughness, is significantly increased if the ratio of modified polypropylene relative to the concentration of polyamide plus modified polypropylene is larger than 15%. As to the use of modified polypropylene, it was found that the melt index should be between 50 and 150 g/cm³, measured at 2.16 kg and 190°C and the functionality of preferred maleic anhydride between 0.05 and 3%, most preferably between 0.2 and 0.8%.

By varying the content of modified EPDM, it is possible to balance flexural strength and notched Izod impact strength. The higher the content of modified EPDM, the lower is flexural strength, but the higher the notched Izod impact strength. A good notched Izod impact strength in combination with good falling dart impact strength can also be achieved with significantly higher concentrations of modified EPDM but low concentrations of modified polypropylene, but only at the expense of a much lower stiffness.

### EXAMPLES AND TEST RESULTS

The following examples illustrate the invention but are not intended to limit it. Where not otherwise specified, temperatures are given in degrees centigrade and all parts, proportions and percentages are by weight.

### Example 1 - Unfilled blends of polyamide (PA6.6)/homopolypropylene (Homo-PP) (refer to resins 0 to 10 in Table 1)

In general, resins 1 to 10 in Table 1 show the effect of varying concentrations of unmodified PP, modified ethylene-propylene-diene monomer (EPDM) and modified PP in PA6.6 on moisture sensitivity of selected physical properties and the effect on Gardner and Izod impact strength in comparison to an unmodified polyamide 6.6. Resins 7 and 10 are within the scope of the present invention.

Resin 0 in Table 1 is an unmodified virgin polyamide 6.6, Zytel® 101 NC10 from Du Pont. It was used as a control resin, which was only injection molded without prior extrusion. All resins 1 to 10 in Table 1 are unfilled blends containing 61.8% to 85.8 weight percent of Zytel® 101 NC10, a virgin PA6.6 with a relative viscosity (RV) of 50 and 10.0% to 25.0 weight percent of ProFax® 6723 from Himont, a virgin homo-polypropylene with a melt index (MI) at 2.16 kg/190°C of 0.8g/10 min. The EPDM #1 used for modification was based on 70/30/4.2/0.12% ethylene/propylene/1.4-hexadiene/norbornadiene. The maleic anhydride (Man)-EPDM =1 in Table 1 had a MI at 2.16 kg/280°C of 1.2-4.8 g/10 min. and a maleic anhydride (Man)-functionality of 1.5-2.0%. It was varied from 2.0 to 15.0 weight percent.

The modified polypropylene Man-PP #1 was based on co-polymer HMA6100 from Shell with a melt index of 1.5 g/l0min., measured at 2.16 kg/190°C. The converted Man-PP #1 had a melt index of 100 g/10min., at 2.16 kg/190°C and 0.55% Man-functionality. It was varied from 2.0% to 15.0 weight percent. All 10 resins contained 0.2 weight percent of a metallic antioxidant (A0#1).

Only polymers with a moisture content of <0.15% were used. For each blend, all ingredients were tumble blended and fed as a total pre-blend into the rear of a 28 mm Werner & Pfleiderer twin screw extruder. Compounding was conducted at a feed rate of 5 to 15 kg/hr and a screw speed of 100 rpm. Barrel temperature setting from zone 1 to the die were 240°, 255°, 255°, 255°, 255°, 255°C, to get-a melt temperature at the exit of the die of 270° to 275°C.

The extrudate exiting the die was quenched in water, the surface water on the strands removed by compressed air and cut into pellets. The pellets were then dried in a vacuum oven at 80° to 100°C overnight prior to injection molding of the test specimens with a mold and melt temperature of 60° and 275° to 280°C, respectively.

The test results in Table 1 show that all ten PA6.6/H-PP blends do exhibit an improved retention of physical properties, such as flex modulus, compared to unmodified PA6.6. The data further show that while dry-as-molded (DAM) notched Izod impact strength improves over unmodified PA6.6 with the addition of Man-PP and/or Man-EPDM, a certain amount of either Man-PP and/or Man-EPDM has to be exceeded in order to achieve both good DAM Izod and good, DAM Gardner toughness (see resins 7 and 10, which are within the scope of the present invention. The bars were conditioned in 50°C water for six days.

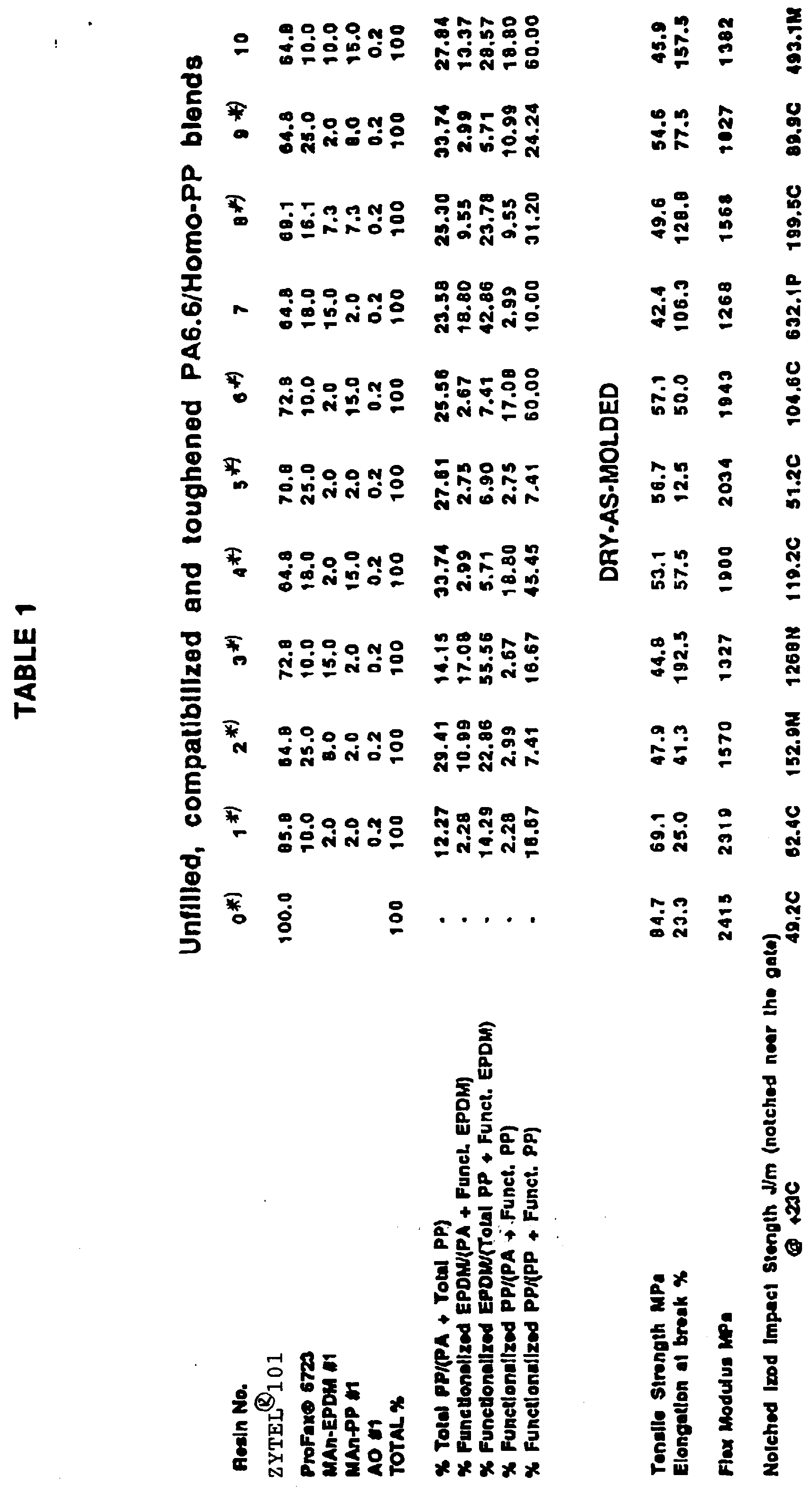

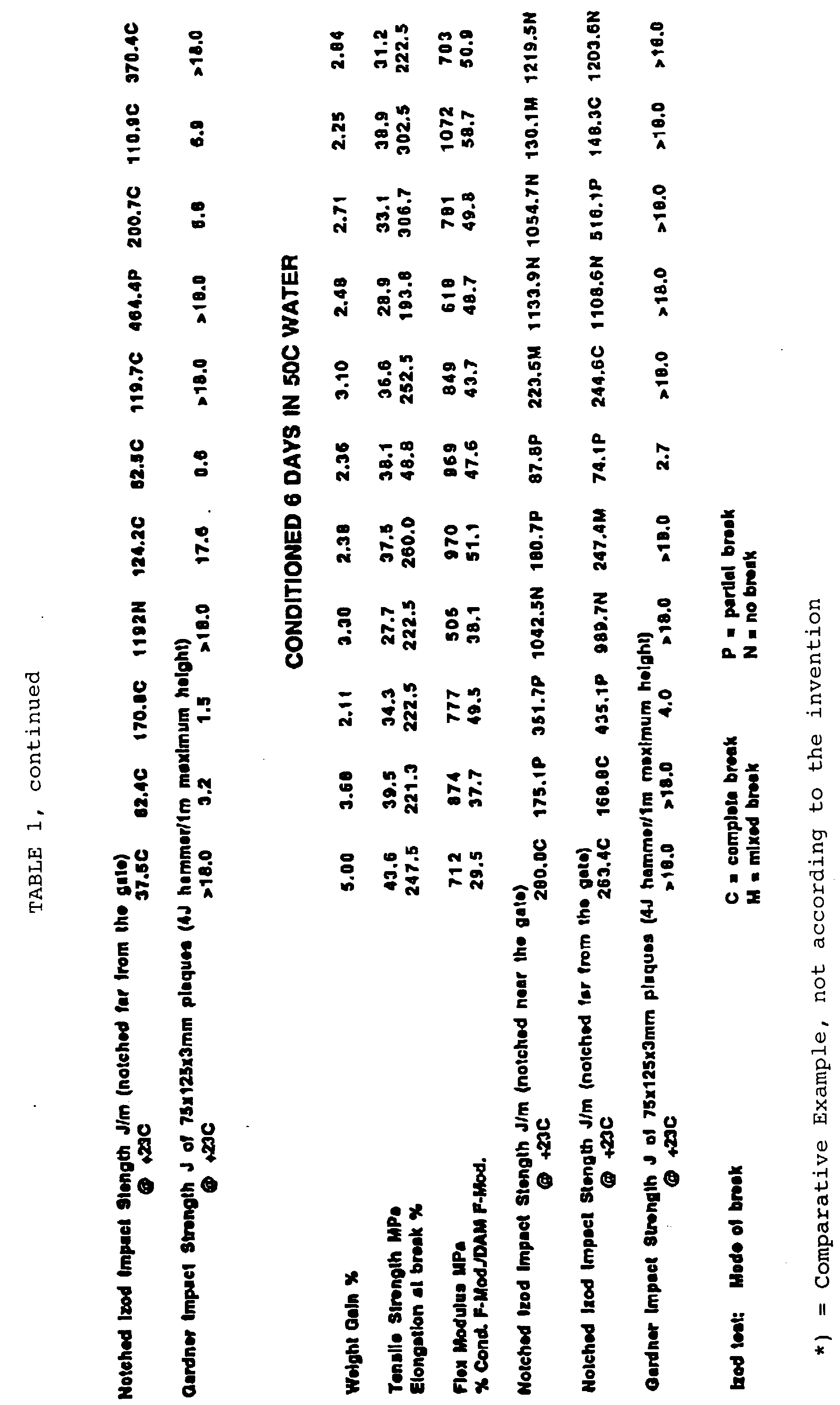

## Claims

1. A polymeric composition consisting of:
(a) 45%-65% by weight polyamide;
(b) 10%-18% by weight unmodified polypropylene;
(c) 10%-15% by weight ethylene-propylene-diene monomer grafted with an acid having at least one carboxylic acid group or a derivative thereof comprising 50%-80% by weight of ethylene, 10%-50% by weight of propylene, 1%-10% by weight of a diene of 6-12 carbon atoms, and an acid content of 0.05%-3% by weight of the diene;
(d) 2%-15% by weight a grafted modified polypropylene grafted with an acid selected from carboxylic acid or derivative thereof, having a melt index at 190 °C of 50-150 g/10 minutes, the grafted propylene having an acid content of 0.05%-3% by weight of the grafted polypropylene; and
(e) optionally inorganic fillers and other additives, whereby the composition has (i) a dry-as-molded Gardner toughness (ASTM D-3029) greater than 18 Joules and a Notched Izod toughness (ASTM D-256) greater than 120 Joules/meter, and (ii) a water absorption less than 2% by weight at equilibrium at 50% Relative Humidity.

2. The composition of claim 1 wherein the component (a) is 6.6 polyamide and has a relative viscosity as measured in 90 % formic acid in the range of 40-60.

3. The composition of claim 1 wherein the component (b) is isotactic homopolypropylene having a melt flow index measured at 2.16 kg and 190 °C of less than 4 g/10 min.

4. The composition of claim 1 wherein the diene of component (c) is selected from 1,4-hexadiene and norbornadiene.

5. The composition of claim 4 wherein component (c) is grafted with 0.2%-2% by weight of maleic anhydride.

6. The composition of claim 1 wherein component (d) is selected from the group consisting of a homopolymer of propylene and a copolymer of propylene and ethylene grafted with 0.5%-1% by weight of maleic anhydride, and having a melt index measured at 2.16 kg and 190 °C of 90-105 g/10 min.

7. The composition of any one of claims 1 to 6 in the form of a shaped article.

## Patentansprüche

1. Polymere Zusammensetzung, bestehend aus:
(a) 45 Gew.-% - 65 Gew.-% Polyamid;
(b) 10 Gew.-% - 18 Gew.-% nicht modifizierten Polypropylens;
(c) 10 Gew.-% - 15 Gew.-% Ethylen-Propylen-Dien-Monomer, gepfropft mit einer Säure, die wenigstens eine Carbonsäuregruppe oder deren Derivat aufweist, umfassend 50 Gew.-% - 80 Gew.-% Ethylen, 10 Gew.-% - 50 Gew.-% Propylen, 1 Gew.-% - 10 Gew.-% eines Diens mit 6 - 12 Kohlenstoffatomen und einen Säuregehalt von 0,05 Gew.-% - 3 Gew.-% des Diens;
(d) 2 Gew.-% - 15 Gew.-% eines gepfropften, modifizierten Polypropylens, gepfropft mit einer Säure, ausgewählt aus einer Carbonsäure oder deren Derivat, mit einem Schmelzindex bei 190 °C von 50 - 150 g/10 min, wobei das gepfropfte Propylen einen Säuregehalt von 0,05 Gew.-% - 3 Gew.-% des gepfropften Polypropylens aufweist; und
(e) gegebenenfalls anorganische Füllstoffe und andere Zusätze, wobei die Zusammensetzung (i) trocken nach dem Formpressen eine Gardner-Zähigkeit (ASTM D-3029) von mehr als 18 J und eine Kerbschlagzähigkeit nach Izod (ASTM D-256) von mehr als 120 J/m und (ii) eine Wasserabsorption von weniger als 2 Gew.-% im Gleichgewicht bei 50 % relativer Feuchtigkeit aufweist.

2. Zusammensetzung nach Anspruch 1, wobei die Verbindung (a) Polyamid 6,6 ist und ein Viskositätsverhältnis, gemessen in 90 %iger Ameisensäure, im Bereich von 40 - 60 aufweist.

3. Zusammensetzung nach Anspruch 1, wobei die Komponente (b) isotaktisches Homopolypropylen mit einem Schmelzflußindex, gemessen bei 2,16 kg und 190 °C, von weniger als 4 g/10 min ist.

4. Zusammensetzung nach Anspruch 1, wobei das Dien der Komponente (c) aus 1,4-Hexadien und Norbornadien ausgewählt ist.

5. Zusammensetzung nach Anspruch 4, wobei die Komponente (c) mit 0,2 Gew.-% - 2 Gew.-% Maleinsäureanhydrid gepfropft ist.

6. Zusammensetzung nach Anspruch 1, wobei die Komponente (d) aus der Gruppe ausgewählt ist bestehend aus einem Homopolymer von Propylen und einem Copolymer von Propylen und Ethylen, gepfropft mit 0,5 Gew.-% - 1 Gew.-% Maleinsäureanhydrid und mit einem Schmelzindex, gemessen bei 2,16 kg und 190 °C, von 90 - 105 g/10 min.

7. Zusammensetzung nach irgendeinem der Ansprüche 1 bis 6 in der Form eines geformten Gegenstandes.

## Revendications

1. Composition polymère constituée :
(a) de 45 % à 65 % en poids de polyamide ;
(b) de 10 % à 18 % en poids de polypropylène non modifié ;
(c) de 10 % à 15 % en poids d'éthylène-propylène-monomère diénique greffé avec un acide ayant au moins un groupe acide carboxylique ou un dérivé de celui-ci, comprenant 50 % à 80 % en poids d'éthylène, 10 % à 50 % en poids de propylène, 1 % à 10 % en poids d'un diène de 6 à 12 atomes de carbone, et une teneur en acide de 0,05 % à 3 % en poids sur la base du diène ;
(d) de 2 % à 15 % en poids d'un polypropylène greffé modifié, greffé avec un acide choisi parmi un acide carboxylique ou un dérivé de celui-ci, ayant un indice de fusion à 190 °C de 50 à 150 g/10 minutes, le propylène greffé ayant une teneur en acide de 0,05 % à 3 % en poids sur la base du polypropylène greffé ; et
(e) facultativement, de charges inorganiques et autres additifs,
la composition ayant (a) une ténacité Gardner à l'état sec venant du moulage (ASTM D-3029) supérieure à 18 joules et une résistance au choc Izod avec entaille (ASTM D-256) supérieure à 120 J/m, et (ii) une absorption d'eau inférieure à 2 % en poids à l'équilibre à 50 % d'humidité relative.

2. Composition selon la revendication 1, dans laquelle le constituant (a) est le polyamide 6.6 et a une viscosité relative, telle que mesurée dans de l'acide formique à 90 %, dans la gamme de 40 à 60.

3. Composition selon la revendication 1, dans laquelle le constituant (b) est un homopolypropylène isotactique ayant un indice d'écoulement à l'état fondu, mesuré à 2,16 kg et 190 °C, inférieur à 4 g/10 min.

4. Composition selon la revendication 1, dans laquelle le diène du constituant (c) est choisi parmi le 1,4-hexadiène et le norbornadiène.

5. Composition selon la revendication 4, dans laquelle le constituant (c) est greffé avec 0,2 % à 2 % en poids d'anhydride maléique.

6. Composition selon la revendication 1, dans laquelle le constituant (d) est choisi dans le groupe constitué d'un homopolymère du propylène et d'un copolymère du propylène et de l'éthylène greffé avec 0,5 % à 1 % en poids d'anhydride maléique, et ayant un indice de fusion, mesuré à 2,16 kg et 190 °C, de 90 à 105 g/10 min.

7. Composition selon l'une quelconque des revendications 1 à 6, sous la forme d'un article façonné.
